# EUROPÄISCHE PATENTSCHRIFT

(11) **EP 0 958 721 B1**
(45) Veröffentlichungstag und Bekanntmachung des Hinweises auf die Patenterteilung: **24.07.2002**
(21) Anmeldenummer: 99108221.5
(22) Anmeldetag: 27.04.1999
(51) Int. Cl.: A01B 33/08

(54) **Angetriebene Bodenbearbeitungsmaschine**
Driven soil working machine
Machine entraînée pour le travail du sol

(30) Priorität: 07.05.1998 DE 19820375
(43) Veröffentlichungstag der Anmeldung: 24.11.1999
(73) Patentinhaber: Amazonen-Werke H. Dreyer GmbH & Co. KG, 49205 Hasbergen (DE)
(72) Erfinder: Schomäker, Wilfried, 26160 Bad Zwischenahn (DE); Geiseke, Reinhard, 27798 Hude (DE)

(56) Entgegenhaltungen:
- EP-A- 0 333 109
- FR-A- 2 306 611
- NL-A- 7 506 652
- NL-A- 7 509 994
- NL-A- 7 614 518

## Beschreibung

Die Erfindung betrifft eine angetriebene Bodenbearbeitungsmaschine gemäß des Oberbegriffes des Patentanspruches 1.

Derartige Bodenbearbeitungsmaschinen sind beispielsweise aus EP-A-0 333 109 bekannt. Diese Bodenbearbeitungsmaschinen werden im allgemeinen Sprachgebrauch als Kreiseleggen oder Kreiselgrubber bezeichnet. Diese Maschinen weisen einen quer zur Fahrtrichtung langgestreckten Kastenbalken auf, der mittels eines Deckelelementes abgedeckt ist. In dem Kastenbalken sind die Stirnräder angeordnet, welche die in dem Kastenbalken gelagerten Werkzeugkreisel rotierend antreiben. Die Oberwand des Kastenbalkens wird von einem abnehmbaren Deckelelement gebildet, welches mittels Schraubverbindungen an den Wänden des Kastenbalkens befestigt ist. Desweiteren sind an dem Kastenbalken Kupplungselemente zum Anbau der Maschine an einen Kuppelrahmen oder an einen Ackerschlepper angeordnet.

Nachteilig ist bei diesen bekannten Maschinen, daß das Deckelelement und die Kupplungsteile aus vielen Teilen bestehen.

Der Erfindung liegt die Aufgabe zugrunde, den Aufbau der Bodenbearbeitungsmaschine wesentlich zu vereinfachen.

Diese Aufgabe wird erfindungsgemäß durch die kennzeichnenden Merkmale des Patentanspruches 1 gelöst. Infolge dieser Maßnahmen wird ein wesentlich einfacherer Aufbau der Bodenbearbeitungsmaschine erreicht, da die Kupplungselemente in das Deckelelement des Kastenbalkens integriert sind. Hierbei ist besonders vorteilhaft, wenn die Boden- oder Grundplatte des Kupplungselementes die oberen Schenkel des U-Profiles der Getriebewanne miteinander verbindet. Das Deckelelement ist also in integrierter Weise mit den Kupplungselementen als ein Bauteil ausgebildet. Die Boden- oder Grundplatte bildet somit zumindest teilweise das Deckelelement. Die Kupplungselemente können hierdurch an die Boden- oder Grundplatte einstückig angeformt werden. Das Deckelelement ist so in die Kupplungsplatte integriert. Es ist weiterhin möglich, insbesondere wenn die Kastenbalken sehr lang ausgebildet sind, im Rahmen eines Baukastensystems an die Boden- und Grundplatte anschließende Deckelelemente vorzusehen, die den übrigen Bereich des Kastenbalkens abdecken.

Weitere Einzelheiten der Erfindung sind den übrigen Unteransprüchen, der Beispielsbeschreibung und den Zeichnungen zu entnehmen. Hierbei zeigen
- Fig.1: eine Bodenbearbeitungsmaschine in der Ansicht von vorne,
- Fig.2: die Bodenbearbeitungsmaschine in Transportstellung,
- Fig.3: die Bodenbearbeitungsmaschine in der Draufsicht,

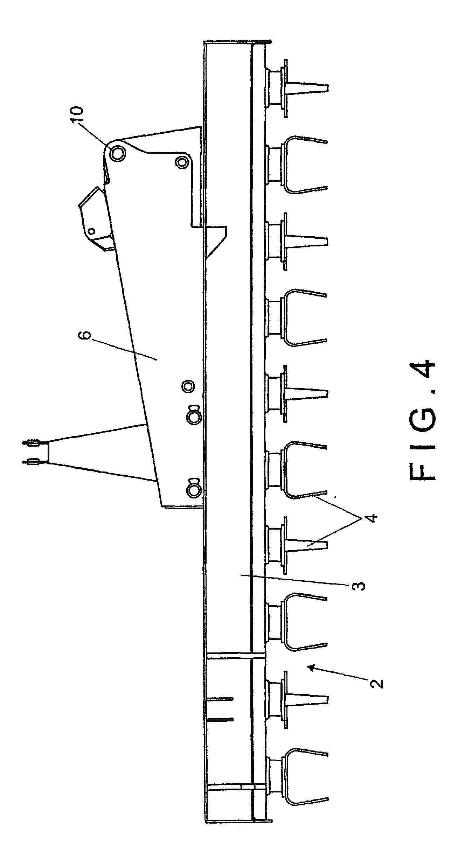

- Fig.4: den Kastenbalken der Bodenbearbeitungsmaschine mit Bodenbearbeitungswerkzeugen und Kupplungselementen in vergrößertem Maßstab,
- Fig.5: den mittleren Kuppelrahmen zum Zusammenkuppeln der beiden klappbar angeordneten Bodenbearbeitungsmaschinen,
- Fig.6: die Bodenbearbeitungsmaschine in Seitenansicht, wobei die Deckelelemente auf dem Kastenbalken montiert sind,

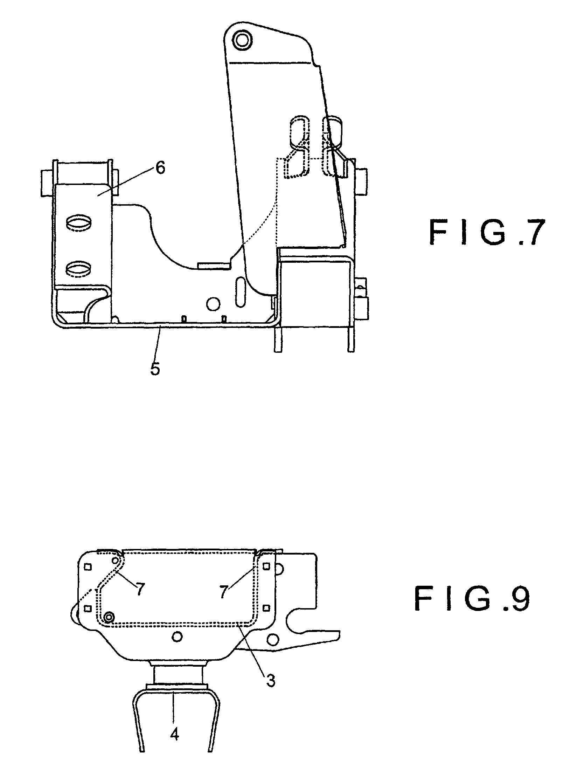

- Fig.7: die Deckelelemente mit den Kuppelelementen in Seitenansicht,

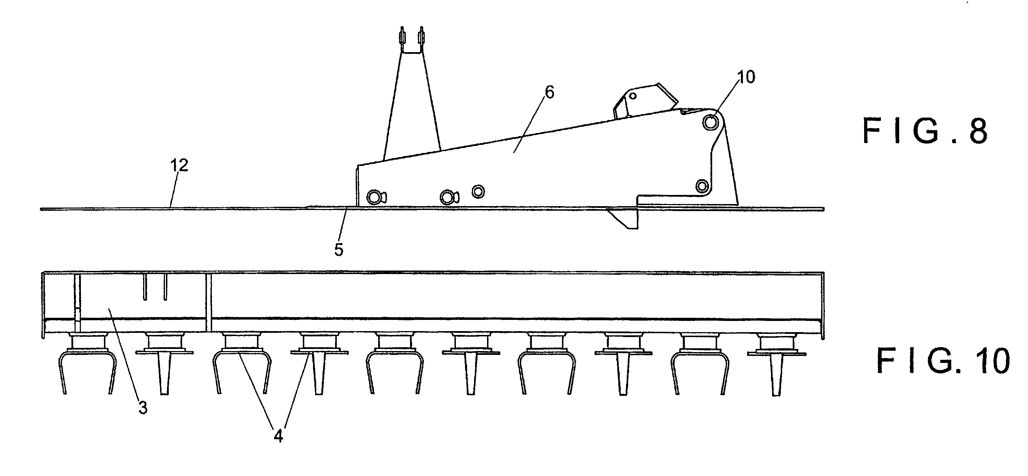

- Fig.8: die Deckelelemente gemäß Fig.7 in Vorderansicht,
- Fig.9: der Kastenbalken ohne Deckelelement in Seitenansicht und
- Fig.10: der Kastenbalken gemäß Fig.9 in Vorderansicht.

Die Bodenbearbeitungsmaschine 1 ist als zusammenklappbare Bodenbearbeitungsmaschine ausgebildet, so daß die Maschine leicht transportiert werden kann.

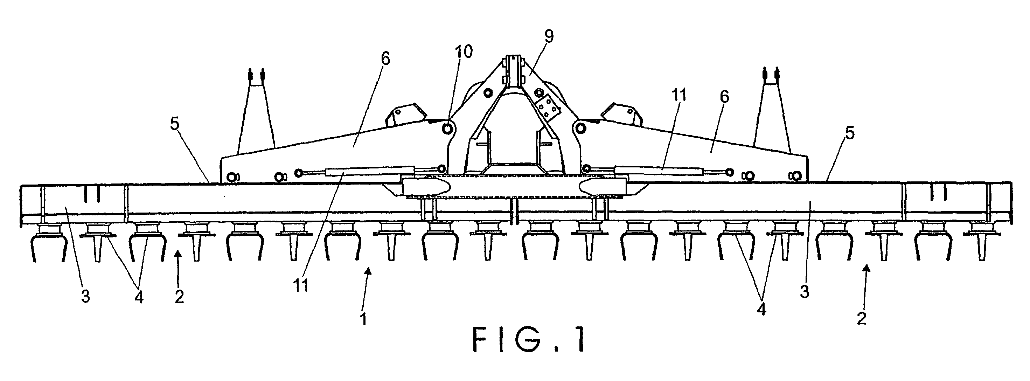

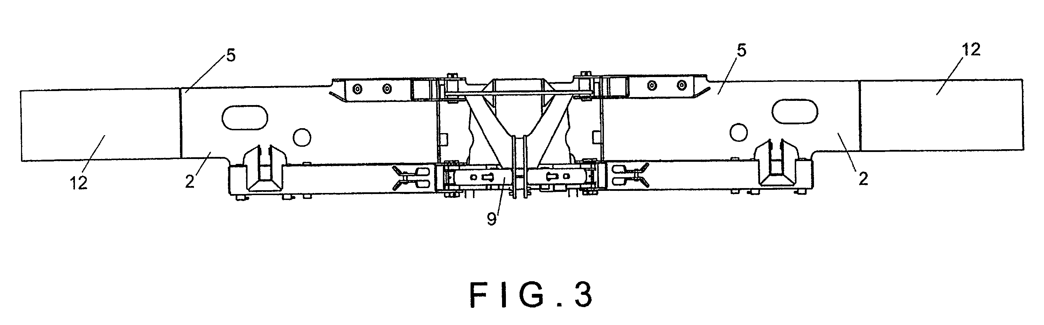

Während der Arbeit befindet sich die Bodenbearbeitungsmaschine 1 in den in den Fig. 1 und 3 dargestellten Position. Jedes Bodenbearbeitungselement 2 der Bodenbearbeitungsmaschine 1 weist einen Kastenbalken 3 auf. In dem Kastenbalken 3 sind die Werkzeugkreisel 4 gelagert, die über in dem Kastenbalken 3 angeordnete Stirnräder im entgegengesetzten Drehsinn zueinander antreibbar sind.

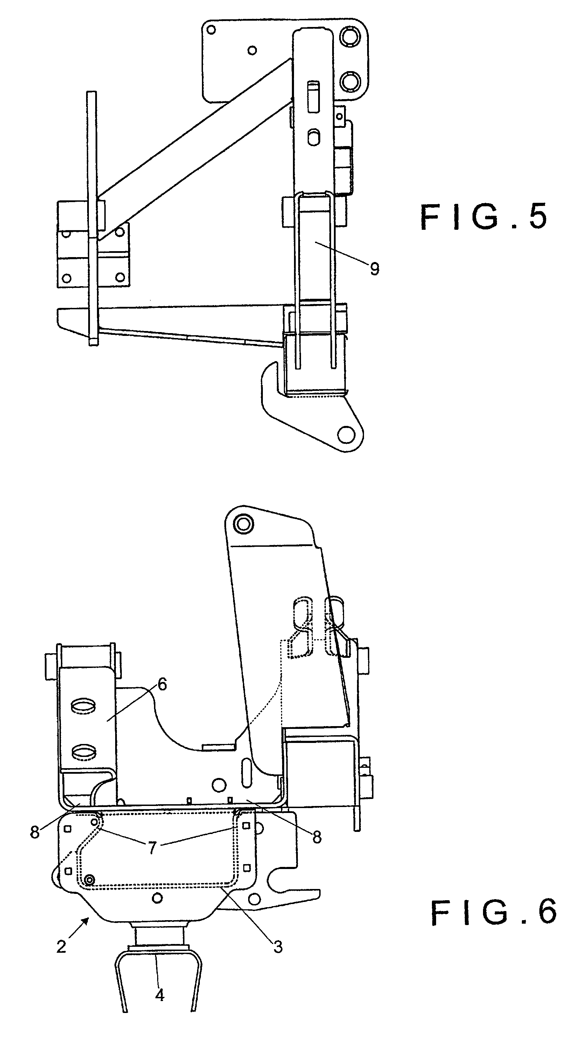

Der Kastenbalken 3 ist als Getriebewanne mit einem im Querschnitt nach oben offenen U-Profil ausgebildet, wie Fig. 6 zeigt. Diese Getriebewanne wird durch die als Deckelelement 5 ausgebildete Boden- oder Grundplatte der Kupplungselemente 6 mit den oberen Schenkeln 7 des U-Profiles des Kastenbalkens 3 miteinander durch Schraubverbindungen 8 verbunden. An der Boden- oder Grundplatte 5 sind die Kupplungselemente 6 angeformt, so daß die Boden- oder Grundplatte 5 und die Kupplungselemente 6 als ein gemeinsames Bauteil ausgebildet sind. Die Kupplungselemente 6 sind an die Boden- oder Grundplatte 5 durch Abkanten einstückig angeformt und es sind weitere Teile an den angekanteten Elementen angeschweißt. Das Deckelelement 5 des Kastenbalkens 3 ist also in die Kupplungselemente 6 integriert angeordnet. Die Kupplungselemente 6 sind im Ausführungsbeispiel als mit einem Kuppelrahmen 9 verbindbare Gelenke 10 ausgebildet.

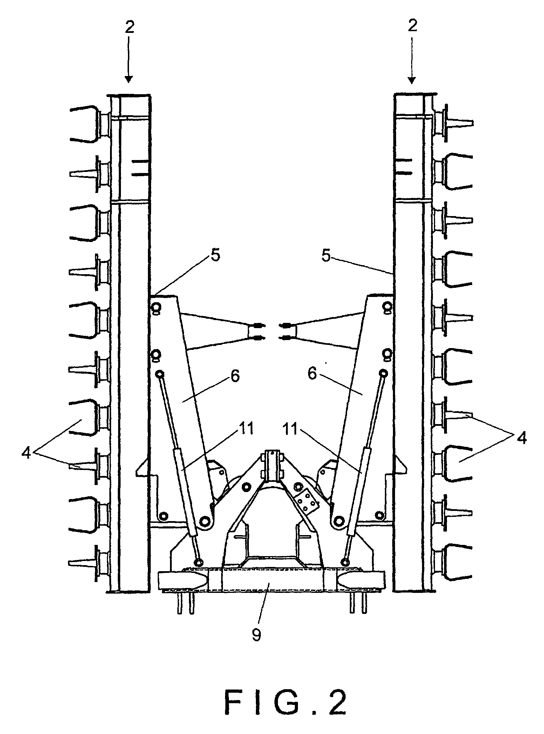

Über die Gelenke 10 werden die Bodenbearbeitungselemente 2 mit dem Kuppelrahmen 9 zu der Bodenbearbeitungsmaschine 1 verbunden. Mittels der Hydraulikzylinder 11, die zwischen den Kupplungselementen 6 der Bodenbearbeitungselemente 2 und dem Kuppelrahmen 9 angeordnet sind, ist die Bodenbearbeitungsmaschine 1 an der in Fig. 1 dargestellten Arbeitsstellung in die in Fig.2 dargestellte Transportstellung einzuklappen. An dem Kuppelrahmen 9 sind Dreipunktkupplungselemente zum Anbau der Maschine an den Dreipunktkraftheber eines Ackerschleppers angeordnet.

Es ist auch möglich, an Stelle der gezeigten Kupplungselemente 6 die Kupplungselemente als Dreipunktanbauelemente auszubilden, so daß jedes Element 2 an den Dreipunktkraftheber eines Schleppers ankuppelbar ist.

Bei Kastenbalken 3, die eine größere Länge als die als Deckelelement 5 ausgebildete Boden- oder Grundplatte aufweisen, ist eine sich an die Boden- oder Grundplatte 5 anschließende Abdeckplatte 12 zur Abdeckung des übrigen Bereiches des Kastenbalkens 3 vorgesehen.

Somit bilden die Boden- oder Grundplatte der Kupplungselemente zumindest teilweise das Deckelelement 5 des Kastenbalkens 3, so daß ein wesentlich einfacherer Aufbau der Bodenbearbeitungsmaschine 1 bzw. der Bodenbearbeitungselemente 2 erreicht wird. Im übrigen ist eine derartige Bodenbearbeitungsmaschine 1 aufgrund der reduzierten Teile wesentlich preiswerter herzustellen.

## Patentansprüche

1. Angetriebene Bodenbearbeitungsmaschine mit einem quer zur Fahrtrichtung langgestreckten und ein Deckelelement (5) aufweisenden Kastenbalken (3), in welchem über Stirnräder rotierend angetriebene Werkzeugkreisel (4) gelagert und die Stirnräder angeordnet sind und dessen Oberwand von einem abnehmbaren und mittels Schraubverbindungen (8) an den Wänden (7) des Kastenbalkens (3) befestigten Deckel (5) gebildet wird, und mit and dem Kastenbalken (3) befestigten Kupplungselementen (6) zum Anbau der Bodenbearbeitungsmaschine an einen Kuppelrahmen (9) und/oder an einen Ackerschlepper, **dadurch gekennzeichnet, daß** die Kupplungselemente (6) eine Boden- und/oder Grundplatte aufweisen, die zumindest teilweise das Deckelelement (5) des Kastenbalkens (3) bildet.

2. Bodenbearbeitungsmaschine nach Anspruch 1, **dadurch gekennzeichnet, daß** der Kastenbalken (3) als Getriebewanne mit einem im Querschnitt nach oben offenes U-Profil ausgebildet ist, und daß die Boden- und/oder Grundplatte (5) der Kupplungselemente (6) die oberen Schenkel (7) des U-Profiles der Getriebewanne (3) miteinander verbindet.

3. Bodenbearbeitungsmaschine nach einem oder mehreren der vorstehenden Ansprüche, **dadurch gekennzeichnet, daß** bei Getriebewannen (3) mit einer größeren Länge als die Boden- und/oder Grundplatte (5) der Kupplungselemente (6) zumindest eine sich an die Boden- und/oder Grundplatte (5) anschließende Abdeckplatte (12) zur Abdeckung der Getriebewanne (3) vorgesehen ist.

4. Bodenbearbeitungsmaschine nach einem oder mehreren der vorstehenden Ansprüche, **dadurch gekennzeichnet, daß** die Boden- und/oder Grundplatte (5) und die Kupplungselemente (6) als ein gemeinsames Bauteil ausgebildet sind.

5. Bodenbearbeitungsmaschine nach einem oder mehreren der vorstehenden Ansprüche, **dadurch gekennzeichnet, daß** die Kupplungselemente (6) an die Bodenund/oder Grundplatte (5) einstückig angeformt sind.

6. Bodenbearbeitungsmaschine nach einem oder mehreren der vorstehenden Ansprüche, **dadurch gekennzeichnet, daß** der Deckel (5) der Getriebewanne (3) in die Kupplungselemente (6) integriert angeordnet ist.

7. Bodenbearbeitungsmaschine nach Anspruch 1, **dadurch gekennzeichnet, daß** die Kupplungselemente als Dreipunktanbaurahmen ausgebildet sind.

8. Bodenbearbeitungsmaschine nach Anspruch 1, **dadurch gekennzeichnet, daß** die Kupplungselemente (6) als mit einem Kuppelrahmen (9) verbindbare Gelenke (10) ausgebildet sind.

## Claims

1. Driven ground cultivating machine, having a box-type bar (3), which is elongate when viewed transversely relative to the direction of travel and has a cover member (5), in which bar there are mounted rotary tools (4), which are rotatably driven via spur wheels, and in which bar are disposed the spur wheels, and the upper wall of which bar is formed by a detachable cover (5), which is secured to the walls (7) of the box-type bar (3) by means of screw-connections (8), and said machine having coupling members (6), which are secured on the box-type bar (3), for the attachment of the ground cultivating machine to a coupling frame (9) and/or to a tractor, **characterised in that** the coupling members (6) have a bottom and/or base plate, which at least partially forms the cover member (5) of the box-type bar (3).

2. Ground cultivating machine according to claim 1, **characterised in that** the box-type bar (3) is in the form of a transmission trough having a U-shaped profile which is upwardly open in cross-section, and **in that** the bottom and/or base plate (5) of the coupling members (6) interconnects the upper portions (7) of the U-shaped profile of the transmission trough (3).

3. Ground cultivating machine according to one or more of the preceding claims, **characterised in that**, for transmission troughs (3) which have a length greater than the bottom and/or base plate (5) of the coupling members (6), at least one cover plate (12), which communicates with the bottom and/or base plate (5), is provided to cover the transmission trough (3).

4. Ground cultivating machine according to one or more of the preceding claims, **characterised in that** the bottom and/or base plate (5) and the coupling members (6) are in the form of a common structural member.

5. Ground cultivating machine according to one or more of the preceding claims, **characterised in that** the coupling members (6) are moulded to fit integrally on the bottom and/or base plate (5).

6. Ground cultivating machine according to one or more of the preceding claims, **characterised in that** the cover (5) of the transmission trough (3) is disposed so as to be incorporated in the coupling members (6).

7. Ground cultivating machine according to claim 1, **characterised in that** the coupling members are in the form of three-point attachment frames.

8. Ground cultivating machine according to claim 1, **characterised in that** the coupling members (6) are in the form of pivot joints (10) connectable to a coupling frame (9).

## Revendications

1. Machine pour le travail du sol, entraînée, comportant une poutre en caisson (3) allongée transversalement à la direction de déplacement cette poutre comportant un élément de recouvrement (5), et logeant des pignons droits entraînant en rotation les rotors (4) installés dans cette poutre, dont la paroi supérieure est formée par un couvercle (5) amovible, relié par des vis (8) aux parois (7) de la poutre en caisson (3), avec des éléments de couplage (6) fixés à la poutre en caisson (3) pour monter la machine de travail du sol sur un châssis d'attelage (9) et/ou un tracteur agricole,
**caractérisée en ce que**
les éléments d'attelage (6) comprennent une plaque de fond et/ou une plaque de base constituant au moins en partie l'élément de recouvrement (5) de la poutre en caisson (3).

2. Machine pour le travail du sol selon la revendication 1,
**caractérisée en ce que**
la poutre en caisson (3) est en forme de goulotte de transmission ayant une section avec un profil en forme de U ouvert vers le haut, et la plaque de fond et/ou la plaque de base (5) des éléments d'attelage (6) relie les branches supérieures (7) du profil en U de la goulotte de transmission (3).

3. Machine pour le travail du sol selon une ou plusieurs des revendications précédentes,
**caractérisée en ce que**
pour des goulottes de transmission (3) de longueur plus grande que la plaque de fond et/ou la plaque de base (5) des éléments d'attelage (6), au moins une plaque de recouvrement (12) adjacente à la plaque de fond et/ou à la plaque de base (5) assure la couverture de la goulotte de transmission (3).

4. Machine pour le travail du sol selon une ou plusieurs des revendications précédentes,
**caractérisée en ce que**
la plaque de fond et/ou la plaque de base (5) et les éléments d'attelage (6) sont constitués par une pièce unique.

5. Machine pour le travail du sol selon l'une quelconque des revendications,
**caractérisée en ce que**
les éléments d'attelage (6) sont formés en une seule pièce sur la plaque de fond et/ou la plaque de base (5).

6. Machine pour le travail du sol selon l'une quelconque des revendications,
**caractérisée en ce que**
l'élément de recouvrement (5) de la goulotte de transmission (3) est intégré dans les éléments d'attelage (6).

7. Machine pour le travail du sol selon la revendication 1,
**caractérisée en ce que**
les éléments d'attelage sont constitués par un châssis d'attelage en trois points.

8. Machine pour le travail du sol selon la revendication 1,
**caractérisée en ce que**
les éléments d'attelage (6) sont constitués par des articulations (10) reliées à un châssis d'attelage (9).
